Europäisches Patentamt

European Patent Office

Office européen des brevets

(19)

(11) Numéro de publication : **0 133 685**
**B1**

(12) **FASCICULE DE BREVET EUROPÉEN**

(45) Date de publication du fascicule du brevet :
07.09.88

(21) Numéro de dépôt : **84109150.7**

(22) Date de dépôt : **02.08.84**

(51) Int. Cl.⁴ : **B 60 P 3/03**, G 07 D 1/00,
**E 05 G 1/00**

(54) Système de sécurité de transport de fonds ou d'effets bancaires.

(30) Priorité : **05.08.83 FR 8312994**

(43) Date de publication de la demande :
**06.03.85 Bulletin 85/10**

(45) Mention de la délivrance du brevet :
**07.09.88 Bulletin 88/36**

(84) Etats contractants désignés :
**AT BE CH DE FR GB IT LI LU NL SE**

(56) Documents cités :
**EP-A- 0 004 436**
**EP-A- 0 022 721**
**EP-A- 0 030 413**
**FR-A- 2 016 423**
**FR-A- 2 280 157**
**FR-A- 2 382 211**
**FR-A- 2 445 429**
**FR-A- 2 485 234**
**US-A- 4 380 316**

(73) Titulaire : **AXYTEL, Société à Responsabilité Limitée**
**Rue de la Redoute**
**F-21100 Dijon (FR)**

(72) Inventeur : **Bertrand, Dominique**
**111, rue des Moines**
**F-75017 Paris (FR)**
Inventeur : **Leterme, Georges**
**1, rue Frédéric Clement**
**F-92380 Garches (FR)**
Inventeur : **Devaux, Franklin**
**80, chemin du Point du Jour**
**F-25000 Besançon (FR)**

(74) Mandataire : **Casalonga, Alain et al**
**BUREAU D.A. CASALONGA OFFICE JOSSE & PETIT**
**Morassistrasse 8**
**D-8000 München 5 (DE)**

## Description

La présente invention concerne les systèmes permettant d'apporter la sécurité exceptionnelle requise pour les transport de fonds ou d'effets bancaires comme : billets de banque, chèques, cartes de crédit, etc..., et particulièrement ceux aboutissant à la destruction, ou à la mise hors d'usage, de la marchandise transportée en cas de tentative de détournement.

Les systèmes connus se caractérisent généralement par l'emploi de moyens physiques lourds : camions blindés ou transport de coffres-forts, et des moyens humains importants : plusieurs convoyeurs armés.

La destruction ou la mise hors d'usage est provoquée par l'un ou l'autre des convoyeurs par des moyens souvent mécaniques, ou par des dispositifs électroniques chargés de la détection d'événements environnants (radars, etc...).

Par ailleurs, selon le document FR-A-2 445 429, un container de transport de documents est équipé d'une serrure électronique pouvant être condamnée et décondamnée par introduction d'un signal codé. Cette serrure comprend une mémoire dans laquelle le signal codé est mémorisé et reste figé. Cette serrure électronique met en route, c'est-à-dire ouvre, un certain nombre de détecteurs et en cas de détection d'un état anormal, le détecteur ayant décelé cet état anormal se ferme et déclenche un dispositif de mise hors d'usage des documents.

Par conséquent, chacun de ces détecteurs a pour fonction de détecter un état anormal, ce qui fait qu'une panne banale, par exemple une coupure d'alimentation électrique, rend le système complètement inefficace.

Ces systèmes connus sont rarement à l'abri des complicités, volontaires ou sous contrainte, des convoyeurs ou des responsables du chargement ou du déchargement de la marchandise, ni à l'abri d'agressions puissamment organisées.

Le système suivant l'invention tel que défini par la revendication 1 permet, avec des moyens moins importants, de réduire considérablement ces risques.

En particulier, il exige le concours obligatoire d'informations codées détenues secrètement et de manière indépendante par plusieurs utilisateurs responsables résidant en des endroits différents, pour accéder légalement à la marchandise. Ces informations sont notamment ignorées du convoyeur, ou des convoyeurs si des règlements, horaires par exemple, imposent leur pluralité.

Aucun de ces responsables ne peut donc, seul, volontairement ou sous contrainte, déjouer le système.

Ce système se caractérise en ce qu'il ne se consacre aucunement à détecter des événements environnants, mais se consacre exclusivement à exécuter un processus codé rigoureux.

Ainsi, la marchandise transportée n'est pas destinée à être livrée intacte sauf s'il advient une anomalie, mais est destinée à être détruite, ou mise hors d'usage, sauf si un processus rigoureux, qu'elle est seule à connaître par intelligence artificielle, est intégralement exécuté.

Le système met en œuvre, en effet, des moyens électroniques dont certains, associés à la marchandise, vont lui attribuer cette intelligence artificielle.

Les liaisons entre les moyens électroniques jouent le rôle essentiel d'amarres dont l'efficacité ne réside pas dans leur solidité physique, mais dans le dialogue secret et permanent qui y circule.

D'autres caractéristiques du système conforme à l'invention sont définies dans les revendications 2 à 11.

Parmi les événements prévus au programme du processus imposé figurent des tests d'états du système qui doivent donc être conformes aux prévisions. Cela concerne des états physiques comme :

— états de systèmes de verrouillage, par exemple : condamnés-décondamnés, ouverts-fermés,

— états de contenants, par exemple : état de leur milieu, état de leurs parois, et des états logiciels comme :

— état des programmes affectés aux moyens électroniques, état du déroulement des événements inscrits dans ces programmes, état des communications entre les moyens électroniques.

On décrira maintenant, à titre d'exemple pour une bonne compréhension de l'invention, un moyen de réaliser ces dispositions.

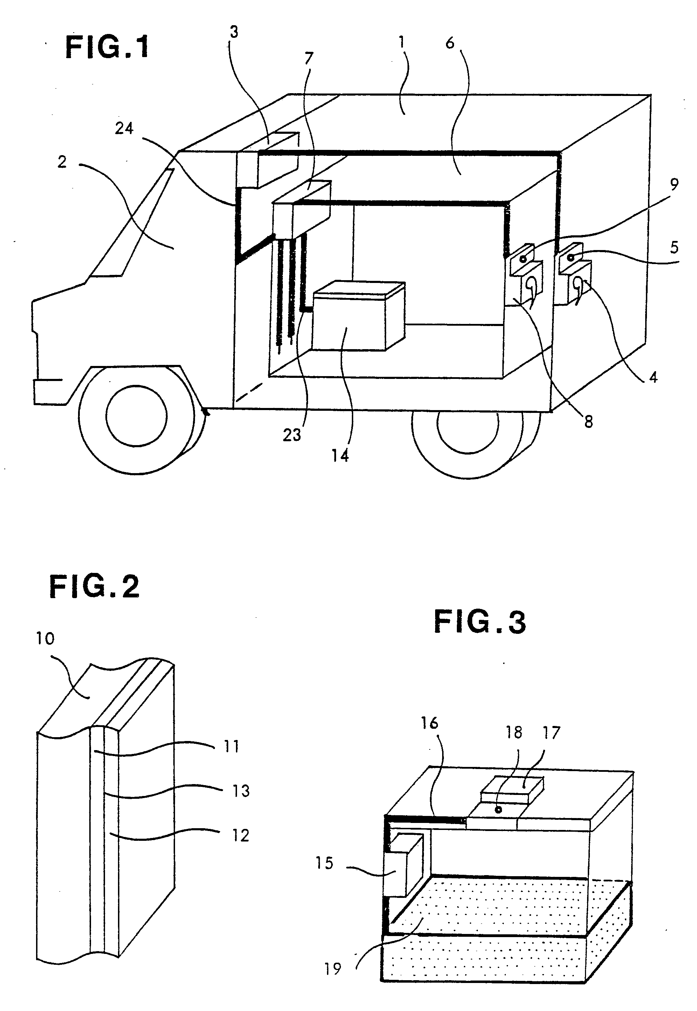

La figure 1 représente la disposition générale des principaux éléments.

Le véhicule est d'un modèle industriel courant, comportant un fourgon 1 et une cabine de pilotage 2 séparés, dont les seules modifications se limitent à :

— d'une part, équiper le fourgon d'un boîtier électronique 3, logé à l'intérieur, et relié, entre autres liaisons, à son système de verrouillage 4 ainsi qu'à un dispositif spécial 5 permettant sa liaison à l'extérieur,

— et, d'autre part, fixer dans le fourgon un container 6, d'un modèle courant parmi les robustes, de préférence de la manière la plus difficilement démontable possible, par exemple par soudure au plancher du fourgon.

Ce container est également équipé d'un boîtier électronique 7, logé à l'intérieur, et relié, entre autres liaisons, à son système de verrouillage 8 ainsi qu'à un dispositif spécial 9 permettant sa connexion de l'extérieur.

Les parois du container sont traitées de manière à rendre testable leur état par ce boîtier, par d'autres liaisons adaptées.

Divers traitements sont possibles : on peut, par exemple, comme le montre la figure 2, tapisser la face interne de la paroi 10 d'un matériau dont les caractéristiques électriques sont modifiables par toute agression mécanique, comme celui constitué de deux films métalliques 11 et 12 séparés par une couche isolante extrêmement mince 13, facile à se procurer.

La marchandise, généralement à livrer en divers endroits, est répartie dans plusieurs caissettes 14 affectées, chacune, à un destinataire précisé. Ces caissettes sont d'un modèle courant de caissettes spéciales de transport de fonds, dont l'état des parois est rendu testable de même manière que pour le container.

La figure 3 représente une caissette équipée d'un boîtier électronique 15, logé à l'intérieur, et relié, entre autres liaisons 16 : à son système de verrouillage 17, à un dispositif spécial 18 permettant sa liaison à l'extérieur, et à un dispositif de destruction 19, ou de mise hors d'usage, de la marchandise contenue. Ce dernier dispositif est réalisé selon des moyens connus.

Selon d'autres moyens connus, tous les boîtiers électroniques du système peuvent se détruire sur leur propre ordre, ou éventuellement se limiter à la destruction de leur programme, afin de protéger le secret informatique.

Le transfert d'une marchandise déterminée d'un point A, considéré comme un lieu sûr chez l'expéditeur, à un point B, considéré comme un lieu sûr chez le destinataire, s'effectue selon les procédures qui suivent, en admettant que cette marchandise soit contenue dans une seule caissette. Dans le cas contraire, la répétition de certaines phases décrites se comprendra aisément.

Le véhicule n'est, dans cet exemple, jamais considéré comme étant en lieu sûr.

Aux points A et B se trouve une console, pouvant être un ordinateur ou un périphérique d'ordinateur, dont le logiciel contient une certaine partie des informations régissant le processus à exécuter, et notamment les codes secrets prévus par les responsables.

Ces codes sont transmis aux consoles de préférence le plus tardivement possible, par des moyens adéquats connus, par exemple par des procédés de télécommunication.

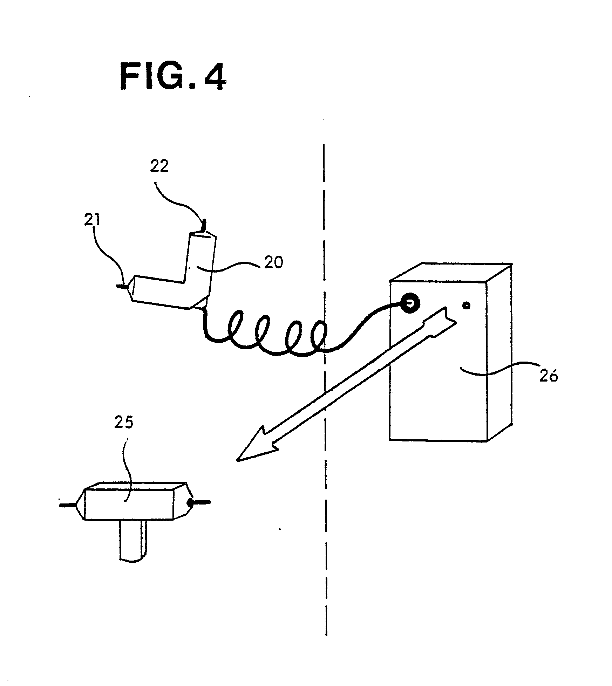

Ces deux consoles sont équipées d'un cordon de liaison constitué par une fibre optique, pouvant se dérouler jusqu'au lieu de stationnement du véhicule. A l'extrémité de ce cordon, comme le montre la figure 4, se trouve un dispositif 20 destiné à se brancher, à ses extrémités 21 et 22, sur les dispositifs spéciaux 5 et 9 d'une part, et 18 d'autre part, jouant le rôle d'une simple dérivation.

Les boîtiers électroniques contiennent également, par exemple par programmes chargés par télétransmission, une partie des informations régissant le même processus.

Ce processus à exécuter est constitué essentiellement en un dialogue permanent entre les boîtiers électroniques pendant le transport, entre les boîtiers et la console du point A pendant le chargement, et entre les boîtiers et la console du point B pendant le déchargement. Il est élaboré de manière plus ou moins complexe par des méthodes informatiques connues.

Au point A, le dispositif 20 est branché, par son extrémité 21, au dispositif 18 de la caissette, de sorte que, durant tout son déplacement jusqu'à l'intérieur du container, celle-ci reste amarrée à la console du point A. Si, en effet, le dialogue entre la caissette et la console ne se passe pas comme prévu, et en particulier s'il survient une absence de dialogue, le contenu de la caissette et son boîtier électronique sont mis hors d'usage.

A l'aide de l'extrémité 22 appliquée successivement aux dispositifs 5 et 9, l'expéditeur décondamne informatiquement l'ouverture du fourgon et du container.

La caissette étant chargée dans le container, l'expéditeur l'amarre au container par un autre cordon 23 relié, de préférence de façon fixe, au boîtier électronique du container, prenant le relais du précédent cordon. Une consigne de minutage est prévue dans le processus pour effectuer cette substitution.

L'expéditeur ferme ensuite le container et le fourgon en condamnant informatiquement leur ouverture à l'aide de l'organe 22.

Le container, quant à lui, est amarré en permanence au fourgon par un cordon fixe 24 reliant leur boîtier électronique.

On remarquera ici que l'ouverture légale du container n'est possible qu'après la manœuvre légale du système de verrouillage du fourgon et qu'une intrusion illégale dans le fourgon, à l'aide d'un chalumeau par exemple, n'élimine pas cet obstacle.

Si, durant le transport, le dialogue entre le boîtier de la caissette 15 et celui du container 7 ne se passe pas comme prévu, le contenu de la caissette, y compris son boîtier, est mis hors d'usage. Si le dialogue entre le boîtier du container 7 et celui du fourgon 3 ne se passe pas comme prévu, tous les boîtiers électroniques du système et la marchandise de toutes les caissettes sont mis hors d'usage.

Au moment du déchargement, la caissette est acheminée au point B par une procédure analogue à celle du chargement, mais effectuée en ordre inverse. Le maintien en bon état de la marchandise dépend pareillement du dialogue entre le boîtier de la caissette et la console du point B.

Dans cet exemple, un moyen particulièrement sûr de gérer la circulation des caissettes vides consiste à les considérer comme contenant de la marchandise à préserver.

Il peut arriver, exceptionnellement, qu'il y ait impossibilité de relier, dans cet exemple de mise en œuvre, le point A ou B au véhicule par un lien, même aussi souple et léger qu'une fibre optique. On s'expose alors, exceptionnellement, aux risques habituels.

Mais la conception du système décrit permet diverses solutions pour réduire largement ces risques.

A titre d'exemple, appliqué au chargement, on peut utiliser un boîtier électronique mobile sans cordon, représenté sur la figure 4.

Ce boîtier spécial 25 est muni d'organes de connexion lui permettant de se brancher sur la console 26 du point A d'une part, et, d'autre part, aux dispositifs 5, 9 et 18, utilisés de même manière que les organes 21 et 22.

Ce boîtier électronique mobile est alors branché sur la console 26 qui lui transmet les instructions nécessaires à l'ouverture légale du fourgon et du container d'une part, et au branchage légal de la caissette au boîtier électronique du container d'autre part. Mais elle le charge aussi de consignes de minutage de toutes les opérations, et en particulier lui assigne le délai de transfert de la caissette du point A au container.

On observera maintenant que le système décrit peut fonctionner de manière satisfaisante en supprimant le container et en reliant directement les boîtiers électroniques des caissettes à celui du fourgon. Le rôle intermédiaire joué par le container est cependant important en cas d'action illégale violente employant des moyens puissants, tels des explosifs.

En effet, un détournement possible du véhicule pourrait le conduire à un endroit propice où l'on pourrait, après intrusion illégale dans le fourgon, mettre les caissettes au contact direct d'explosifs. Les systèmes d'auto-destruction n'agiraient alors pas plus vite que l'explosion, et de la marchandise épargnée pourrait se disséminer.

La présence du container, qu'il faut d'abord violer pour atteindre les caissettes, cela entraînant la mise hors d'usage de leur contenu, empêche cette démarche.

Des explosifs appliqués directement contre le container provoqueraient la dissémination des caissettes, éventuellement détériorées, mais dont le système de dégradation aurait néanmoins le temps d'agir.

On observera également que des mises en œuvre plus complexes du système peuvent être élaborées.

Par exemple, d'autres autorités que les expéditeurs et les destinataires peuvent aussi intervenir au niveau des procédures secrètes, comme le transporteur quand il n'est ni expéditeur ni destinataire et dont la responsabilité entre en jeu dans l'exécution des livraisons.

On observera enfin que l'introduction d'intelligence électronique dans le système peut être mise à profit pour réaliser des options évoluées, comme la mise en panne du véhicule, éventuellement différée, dès que le processus engagé connaît une anomalie.

Le système objet de l'invention peut être utilisé pour la plupart des transports de marchandises dont le détournement peut avoir des conséquences incalculables, au point que leur destruction ou leur mise hors d'usage est préférable.

**Revendications**

1. Système de sécurité de transport de fonds, d'effets bancaires ou d'autres marchandises vouées à la mise hors d'usage en cas de détournement, caractérisé par le fait que

— la marchandise est enfermée à l'intérieur d'au moins une caissette (14) disposée, pendant le transport par un véhicule, dans un fourgon (1) équipant le véhicule,

— la ou chaque caissette (14) est équipée d'un dispositif de verrouillage (17), d'un dispositif (19) de mise hors d'usage de la marchandise, de moyens électroniques (15) reliés au dispositif de mise hors d'usage et pouvant contrôler des états de la caissette dont celui du dispositif de verrouillage, et d'un dispositif de connexion (18) permettant la liaison extérieure des moyens électroniques avec des sources d'informations codées situées en lieu sûr chez les expéditeurs et destinataires,

— le fourgon (1) est équipé d'un dispositif de verrouillage (4), de moyens électroniques (3) pouvant contrôler l'état du dispositif de verrouillage, et d'un dispositif de connexion (5) permettant la liaison extérieure des moyens électroniques avec des sources d'informations codées situées en lieu sûr chez les expéditeurs et les destinataires,

— les moyens électroniques (15, 3) de la ou des caissettes (14) et du fourgon (1) sont reliés entre eux à bord du véhicule, et

— les moyens électroniques (15, 3) exécutent en permanence des tâches rigoureusement prévues par programmation informatique constituant un processus général obligatoire dont toute perturbation provoque la mise hors d'usage de la marchandise.

2. Système selon la revendication 1, caractérisé par le fait qu'il comprend un container (6) fixé à l'intérieur du fourgon (1) pour recevoir la ou les cassettes (14) et équipé d'un dispositif de verrouillage (8), de moyens électroniques (7) pouvant contrôler des états du container dont celui du dispositif de verrouillage, et d'un dispositif de connexion (5) permettant la liaison extérieure des moyens électroniques avec des sources d'informations codées situées en lieu sûr chez les expéditeurs et les destinataires, les moyens électroniques (7) du container (6) étant reliés aux moyens électroniques (3, 15) du fourgon (1) et de la ou des cassettes (14).

3. Système suivant la revendication 1 ou 2, caractérisé par le fait qu'il comprend plusieurs caissettes (14) affectées chacune à un destinataire déterminé.

4. Système suivant l'une quelconque des revendications précédentes, caractérisé par le fait que les sources d'informations codées situées chez les expéditeurs et les destinataires sont des ordinateurs ou des périphériques d'ordinateurs, ou des consoles électroniques, équipés de moyens de transmission d'informations pouvant communiquer avec les moyens électroniques jusqu'au lieu de stationnement du véhicule.

5. Système selon la revendication 4, caractérisé par le fait que les moyens de transmission d'informations sont matériels (fils électriques, câbles coaxiaux, fibres optiques, etc...) ou immatériels (ondes hertziennes, rayonnements, etc...).

6. Système selon l'une quelconque des revendications précédentes, caractérisé par le fait que les moyens électroniques exécutent des tests d'états matériels et logiciels dont tout résultat non conforme provoque une perturbation dans le déroulement du processus obligatoire.

7. Système selon l'une quelconque des revendications précédentes, caractérisé par le fait que l'état des parois des caissettes et du container est testable par les moyens électroniques, par application contre leurs faces internes d'un matériau aux caractéristiques électriques modifiables par toute agression mécanique.

8. Système selon l'une quelconque des revendications précédentes, caractérisé par le fait que lesdites informations codées comprennent des codes secrets introduits par plusieurs utilisateurs responsables résidant en des lieux différents, comme les expéditeurs, les destinataires, le transporteur, etc...

9. Système selon la revendication 8, caractérisé par le fait que les codes secrets sont introduits par les utilisateurs responsables en les transmettant aux sources situées chez les expéditeurs et les destinataires par des moyens de télécommunications.

10. Système selon l'une quelconque des revendications précédentes, caractérisé par le fait que les moyens électroniques exécutent leurs tâches par programmes chargés par télétransmission.

11. Système selon l'une quelconque des revendications 1, 2, 3, 10, caractérisé par le fait que les sources d'informations situées chez les expéditeurs et les destinataires échangent avec les moyens électroniques leurs informations alors assorties de consignes de minutage, pour les opérations se déroulant entre elles et le véhicule, par l'intermédiaire d'un appareil électronique mobile, conçu pour pouvoir être relié d'une part auxdites sources d'informations et d'autre part aux dispositifs de connexion prévus sur les caissettes, le container, et/ou le fourgon du véhicule.

**Claims**

1. A security system for the transportation of funds, valuable papers or other items intended to be rendered useless in the event of misappropriation, characterized in that :
— the items are enclosed inside at least one box (14) which during transport by vehicle is disposed in a van (1) with which the vehicle is equipped,
— the or each box (14) is equipped with a locking device (17), a device (19) for rendering the items useless, electronic means (15) connected to the device for rendering the items useless and adapted to monitor states of the box among which the state, the locking device, and a connection device (18) allowing external connection of the electronic means to coded data sources situated in safe place at the sender's and receiver's,
— the van (1) is equipped with a locking device (4), electronic means (3) adapted to monitor the state of the locking device, and a connection device (5) allowing external connection of the electronic means to coded data sources situated in safe place at the sender's and the receiver's,
— the electronic means (15, 3) of the or each box (14) and of the van (1) are interconnected on the actual vehicle ; and
— the electronic means (15, 3) permanently performs tasks which are strictly laid down by data-processing programming and constitute an obligatory general process, any disturbance of which causes the items to be rendered useless.

2. A system according to claim 1, characterized in that it comprises a container (6) fixed inside the van (1) to receive the or each box (14) an equipped with a locking device (8), electronic means (7) adapted to monitor states of the container, among which the state of the locking device, and a connection device (5) allowing external connection of the electronic means to coded data sources situated in a safe place at the sender's and the receiver's, the electronic means (7) of the container (6) being connected to the electronic means (3, 15) of the van (1) and of the or each box (14).

3. A system according to claim 1 or 2, characterized in that it comprises a plurality of boxes (14) each associated with a given receiver.

4. A system according to any one of the preceding claims, characterized in that the coded data sources situated at the sender's and the receiver's are computers or computer peripherals, or electronic consoles, equipped with data transmission means which can communicate with the electronic means up to the vehicle parking place.

5. A system according to claim 4, characterized in that the data transmission means are physical (electrical leads, coaxial cables, optical fibres and so on) or non-physical (radio waves, radiations, and so on).

6. A system according to any one of the preceding claims, characterized in that the electronic means perform hardware and software state tests, any deviant result of which causes a disturbance in the obligatory sequence.

7. A system according to any one of the preceding claims, characterized in that the state of the walls of the boxes and of the container is testable by the electronic means by the application to their internal surfaces of a material having electrical characteristics which are modified by any mechanical attack.

8. A system according to any one of the preceding claims, characterized in that said coded data comprises secret codes introduced by a plurality of authorized users resident at different places, such as senders, receivers, the transporter, and so on.

9. A system according to claim 8, characterized in that the secret codes are introduced by authorized users by transmitting the same to the sources at the sender's and the receiver's by telecommunications means.

10. A system according to any one of the preceding claims, characterized in that the electronic means perform their tasks by means of programs loaded by teletransmission.

11. A system according to any one of claims 1, 2, 3 and 10, characterized in that the data sources at the sender's and receiver's and the electronic means exchange their data matched with timing references for the operations which take place between them and the vehicle, by means of a mobile electronic unit adapted to be connected, on the one hand, to the said data sources and, on the other hand, to the connecting devices provided on the boxes, the container, and/or the vehicle van.

## Patentansprüche

1. Sicherheitssystem zum Transport von Geld, Wertpapieren oder anderen Waren, die im Falle der Entwendung unbrauchbar gemacht werden sollen, dadurch gekennzeichnet, daß

— die Ware in das Innere wenigstens einer Kassette (14) eingeschlossen ist, die während des Transportes mit einem Fahrzeug in einem Kastenaufbau (1) angeordnet ist, mit dem das Fahrzeug ausgerüstet ist,

— daß die oder jede Kassette (14) mit einer Verriegelungsvorrichtung (17), mit einer Vorrichtung (19) zum Unbrauchbarmachen der Ware, mit elektronischen Einrichtungen (15), die mit der Vorrichtung zum Unbrauchbarmachen der Ware verbunden sind und Zustände der Kassette unter anderem den Zustand der Verriegelungsvorrichtung, kontrollieren können und mit einer Anschlussvorrichtung (18) ausgestattet sind, welche die äußere Verbindung der elektronischen Einrichtungen mit Quellen kodierter Informationen, die bei den Absendern und Empfängern in sicherer Lage angeordnet sind, gestatten,

— daß der Kastenaufbau (1) mit einer Verriegelungsvorrichtung (4), mit elektronischen Einrichtungen (3), welche den Zustand der Verriegelungsvorrichtung überprüfen können und mit einer Anschlussvorrichtung (5) ausgestattet ist, welche die äußere Verbindung der elektronischen Einrichtungen mit Quellen kodierter Informationen, die bei den Absendern und Empfängern in sicherer Lage angeordnete sind, gestattet,

— daß die elektronischen Einrichtungen (15, 3) der Kassette oder die Kassette (14) und des Kastenaufbaus (1) an Bord des Fahrzeuges miteinande verbunden sind, und

— daß die elektronischen Einrichtungen (15, 3) fortlaufend Aufgaben ausführen, die durch Computerprogrammierung streng vorgegeben sind und ein allgemeines, obligatorisches Verfahren darstellen, bei dem jede Störung die Unbrauchbarmachung der Ware auslöst.

2. System nach Anspruch 1, dadurch gekennzeichnet, daß es einen Container (6) umfaßt, der im Inneren des Kastenaufbaus (1) befestigt ist, um die Kassette(n) (14) aufzunehmen und der mit einer Verriegelungsvorrichtung (8), mit elektronischen Einrichtungen (7), welche Zustände des Containers der Verriegelungsvorrichtung überprüfen können, und mit einer Anschlußvorrichtung (5) ausgestattet ist, welche die äußere Verbindung der elektronischen Mittel mit Quellen kodierter Informationen erlaubt, die bei den Absendern und Empfängern in sicherer Lage angeordnet sind, wobei die elektronischen Einrichtungen (7) des Containers (6) mit den elektronischen Einrichtungen (3, 15) des Kastenaufbaus (1) und der Kassette(n) (14) verbunden sind.

3. System nach Anspruch 1 oder 2, dadurch gekennzeichnet, daß es mehrere Kassetten (14) umfaßt, wovon jede einem bestimmten Empfänger zugeordnet ist.

4. System nach einem der vorhergehenden Ansprüche, dadurch gekennzeichnet, daß die bei den Absendern und den Empfängern angeordneten Quellen Kodierter Informationen Computer oder Peripherie-Geräte von Computern oder elektronische Konsolen sind, die mit Informationsübertragungsmitteln ausgrüstet sind, die mit den elektronischen Einrichtungen bis zum Abstellplatz des Fahrzeuges kommunizieren können.

5. System nach Anspruch 4, dadurch gekennzeichnet, daß die Übertragungsmittel für die Informationen materiell (elektrische Drähte, Koaxialkabel, optische Fasern usw.) oder immateriell (Funkwellen, Strahlungen usw.) sind.

6. System nach einem der vorhergenden Ansprüche, dadurch gekennzeichnet, daß die elektronischen Einrichtungen Zustandsüberprüfungen der Hardware und der Software ausführen, wobei jedes nicht entsprechende Ergebnis eine Störung im Ablauf des obligatorischen Verfahrens bewirkt.

7. System nach einem der vorhergehenden Ansprüche, dadurch gekennzeichnet, daß der Zustand der Wände der Kassetten und des Containers durch die elektronischen Einrichtungen überprüft werden kann, indem man an ihrer Innenfläche ein Material anbringt, dessen elektrische Eigenschaften durch jeden mechanischen Angriff veränderbar sind.

8. System nach einem der vorhergehenden Ansprüche, dadurch gekennzeichnet, daß die erwähnten kodierten Informationen Geheimcodes umfassen, die von mehreren verantwortlichen Benutzern eingegeben werden, die sich an verschiedenen Orten befinden, wie Absendern, Empfängern, dem Spediteur usw.

9. System nach Anspruch 8, dadurch gekennzeichnet, daß die Geheimcodes von den verantwortlichen Benutzern eingegeben werden, indem sie zu den bei den Absendern und den Empfängern angeordneten Quellen durch Telekommunikationseinrichtungen übertragen werden.

10. System nach einem der vorhergenden Ansprüche, dadurch gekennzeichnet, daß die elektronischen Einrichtungen ihre Aufgaben durch mittels Fernübertragung geladene Porgramme ausführen.

11. System nach einem der Ansprüche 1, 2, 3, 10, dadurch gekennzeichnet, daß die bei den Absendern und bei den Empfängern befindlichen Informationsquellen und die elektronischen Einrichtungen ihre mit Zeitgebungsanweisungen für die zwischen den Quellen und dem Fahrzeug ablaufenden Operationen versehenen Informationen unter Zwischenschaltung eines beweglichen elektronischen Gerätes austauschen, das so ausgelegt ist, daß es einerseits mit den Informationsquellen und anderseits mit den Anschlussvorrichtungen, die an den Kassetten, dem Container und/oder dem Kastenaufbau des Fahzeuges vorgesehen sind, verbunden werden kann.

## FIG.1

## FIG.2

## FIG.3

# FIG. 4